(19) Europäisches Patentamt
European Patent Office
Office européen des brevets

(11) EP 4 552 902 A1

(12) EUROPEAN PATENT APPLICATION

(43) Date of publication:
14.05.2025 Bulletin 2025/20

(51) International Patent Classification (IPC):
B60L 15/20 (2006.01)

(21) Application number: 24211276.1

(22) Date of filing: 06.11.2024

(52) Cooperative Patent Classification (CPC):
B60L 15/20; B60K 35/26; B60L 2240/16;
B60L 2240/423; B60L 2250/26; B60L 2260/32

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.11.2023 JP 2023190311

(71) Applicant: TOYOTA JIDOSHA KABUSHIKI
KAISHA
Aichi-ken, 471-8571 (JP)

(72) Inventors:
• UCHIDA, Takahiro
TOYOTA-SHI, AICHI-KEN, 471-8571 (JP)
• ARAKAWA, Seiji
TOYOTA-SHI, AICHI-KEN, 471-8571 (JP)
• SAKAI, Kazuhito
TOYOTA-SHI, AICHI-KEN, 471-8571 (JP)
• FUKUHARA, Chie
TOYOTA-SHI, AICHI-KEN, 471-8571 (JP)

(74) Representative: Cabinet Beau de Loménie
158, rue de l'Université
75340 Paris Cedex 07 (FR)

(54) ELECTRIC VEHICLE AND CONTROL SYSTEM

(57) An electric vehicle (10) is configured to be switchable to an autonomous driving mode. The electric vehicle (10) comprises an accelerator pedal (22), a shift device, a speaker (44), and a controller (50). The speaker (44) outputs a pseudo engine sound. When the electric vehicle (10) is not in the autonomous driving mode, the controller (50) changes a motor torque and the pseudo engine sound in response to an operation state of the accelerator pedal (22) and the shift device operated by a driver. When the electric vehicle (10) is in the autonomous driving mode, the controller (50) virtually determines the operation state of the accelerator pedal (22) and the shift device and changes at least one of the motor torque and the pseudo engine sound in response to the virtual operation state.

FIG. 1

Description

TECHNICAL FIELD

The present disclosure relates to an electric vehicle that uses an electric motor as a power unit for traveling.

BACKGROUND ART

A conventional engine vehicle (hereinafter referred to as an "MT vehicle") equipped with a manual transmission (MT) that switches a gear stage by a manual operation of a driver has features in driving operation and driving characteristics and is popular with certain users. The torque characteristics of an internal combustion engine used as a power unit for driving of an engine vehicle are significantly different from those of an electric motor. The electric vehicle is not equipped with the MT, as a matter of course. Therefore, the electric vehicle and the MT vehicle are usually greatly different in driving operation and driving characteristics. On the other hand, the electric motor can adjust the torque characteristics by controlling the voltage to be applied and the field. Therefore, in recent years, a technique has been proposed in which a driver can enjoy driving operation and driving characteristics like an MT vehicle in an electric vehicle by adjusting the torque characteristics of the electric motor (for example, see Patent Literature 1 below).

In addition, the MT vehicle is also attractive in terms of an engine sound heard in response to driving operation. In this regard, a technique has been proposed in which a driver can enjoy an engine sound like that of an MT vehicle in an electric vehicle (for example, see Patent Literature 2 below).

List of Related Art

    Patent Literature 1: JP 2022030872 A
    Patent Literature 2: JP 2011215437 A

SUMMARY

In recent years, in order to reduce the burden of driving operation of a driver, autonomous driving has been considered in which at least acceleration and deceleration are automatically performed without driving operation by the driver. Here, it is conceivable that the driver may want to enjoy driving characteristics and an engine sound of an MT vehicle even when the electric vehicle is in the autonomous driving. However, conventionally, in the autonomous driving of the electric vehicle, the traveling of the vehicle is controlled based on the torque characteristics of a normal electric motor. In addition, conventionally, cooperation with autonomous driving has not been considered in terms of an engine sound. Therefore, when the conventional autonomous driving technique is applied, a driver of an electric vehicle cannot enjoy driving characteristics and an engine sound like the MT vehicle during the autonomous driving.

An object of the present disclosure is, in view of the above problems, to provide a technique that enables a driver to enjoy driving characteristics and an engine sound like those of an MT vehicle even when an electric vehicle is in autonomous driving.

A first aspect of the present disclosure is directed to an electric vehicle that uses an electric motor as a power unit for traveling. The electric vehicle is configured to be switchable to an autonomous driving mode in which at least acceleration and deceleration are automatically performed without driving operation by a driver. The electric vehicle comprises:

    an accelerator pedal;
    a shift device for selecting a gear stage that simulates operation of a transmission;
    a speaker that outputs a pseudo engine sound that simulates an engine sound; and
    a controller.

The controller is configured to:

    when the electric vehicle is not in the autonomous driving mode, change a motor torque output by the electric motor and the pseudo engine sound in response to an operation state of the accelerator pedal and the shift device operated by the driver; and
    when the electric vehicle is in the autonomous driving mode, virtually determine the operation state of the accelerator pedal and the shift device and change at least one of the motor torque output by the electric motor and the pseudo engine sound in response to the virtual operation state.

A second aspect of the present disclosure is directed to a control system of an electric vehicle that uses an electric motor as a power unit for traveling.

The control system comprises:

one or more memories; and
one or more processors connected to the one or more memories.

The electric vehicle is configured to be switchable to an autonomous driving mode in which at least acceleration and deceleration are automatically performed without driving operation by a driver.

The electric vehicle comprises:

an accelerator pedal;
a shift device for selecting a gear stage that simulates operation of a transmission; and
a speaker that outputs a pseudo engine sound that simulates an engine sound.

The one or more processors are configured to:

when the electric vehicle is not in the autonomous driving mode, change a motor torque output by the electric motor and the pseudo engine sound in response to an operation state of the accelerator pedal and the shift device operated by the driver; and
when the electric vehicle is in the autonomous driving mode, virtually determine the operation state of the accelerator pedal and the shift device and change at least one of the motor torque output by the electric motor and the pseudo engine sound in response to the virtual operation state.

According to the present disclosure, the driver can enjoy driving characteristics and an engine sound of an MT vehicle even when the electric vehicle is in autonomous driving.

**BRIEF DESCRIPTION OF DRAWINGS**

FIG. 1 is a diagram schematically showing a configuration of an electric vehicle according to an embodiment;
FIG. 2 is a block diagram showing a configuration of a control system for an electric vehicle according to the embodiment;
FIG. 3A is a diagram for explaining an example of operation characteristic information managed by the controller according to the embodiment;
FIG. 3B is a diagram for explaining another example of the operation characteristic information managed by the controller according to the embodiment;
FIG. 3C is a diagram for explaining another example of the operation characteristic information managed by the controller according to the embodiment;
FIG. 4 is a block diagram showing a functional configuration of the controller of the electric vehicle according to the embodiment;
FIG. 5 is a block diagram showing a functional configuration of the controller of the electric vehicle according to the embodiment;
FIG. 6 is a block diagram showing an example of an MT vehicle model included in the controller according to the embodiment;
FIG. 7A is a diagram for explaining an engine model included in the MT vehicle model;
FIG. 7B is a diagram for explaining an clutch model included in the MT vehicle model;
FIG. 7C is a diagram for explaining a MT model included in the MT vehicle model;
FIG. 8 is a diagram showing torque characteristics of an electric motor realized by motor control using a MT vehicle model in comparison with the torque characteristics of the electric motor realized by normal motor control as an electric vehicle;
FIG. 9 is a diagram schematically showing a configuration of an electric vehicle according to a modification of the embodiment;
FIG. 10 is a block diagram showing functions of a controller for the electric vehicle according to the modification of the embodiment; and

FIG. 11 is a diagram showing a configuration of a pseudo engine sound calculator according to the modification of the embodiment;

## DETAILED DESCRIPTION

Hereinafter, embodiments of the present disclosure will be described with reference to the drawings.

1. Configuration of Electric Vehicle

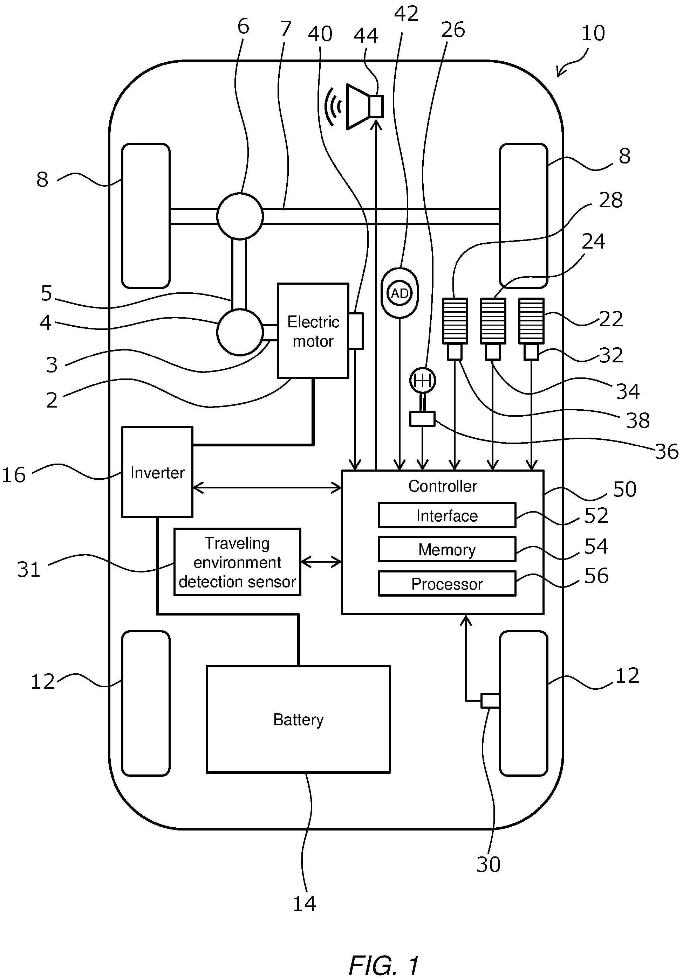

FIG. 1 is a diagram schematically showing a configuration of an electric vehicle 10 according to the present embodiment. As shown in FIG. 1, the electric vehicle 10 includes an electric motor 2 as a power unit. The electric motor 2 is, for example, a brushless DC motor or a three phase AC synchronous motor. The electric motor 2 is provided with a motor speed sensor 40 for detecting the rotational speed thereof. An output shaft 3 of the electric motor 2 is connected to one end of a propeller shaft 5 via a gear mechanism 4. The other end of the propeller shaft 5 is connected to a drive shaft 7 on the front side of the vehicle via a differential gear 6.

The electric vehicle 10 includes driving wheels 8 which are front wheels and driven wheels 12 which are rear wheels. The driving wheels 8 are provided at both ends of the drive shaft 7. Each wheel 8,12 is provided with a wheel speed sensor 30. In FIG. 1, only the wheel speed sensor 30 for the right rear wheel is shown as a representative. The wheel speed sensor 30 is also used as a vehicle speed sensor for detecting the vehicle speed of the electric vehicle 10. The wheel speed sensor 30 is connected to a controller 50 to be described later by an in-vehicle network such as a controller area network (CAN).

The electric vehicle 10 includes a battery 14 and an inverter 16. The battery 14 stores electric energy for driving the electric motor 2. That is, the electric vehicle 10 is a battery electric vehicle (BEV) that travels on electric energy stored in the battery 14. The inverter 16 converts DC power input from the battery 14 into drive power for the electric motor 2. Power conversion by the inverter 16 is performed by PWM control by the controller 50. The inverter 16 is connected to the controller 50 by the in-vehicle network.

The electric vehicle 10 includes, as driving operation devices for the driver to input a driving operation, an accelerator pedal 22 for inputting the driving operation related to acceleration and a brake pedal 24 for inputting the driving operation related to braking. The accelerator pedal 22 is provided with an accelerator position sensor 32 for detecting an accelerator opening which is an operation amount of the accelerator pedal 22. The brake pedal 24 is provided with a brake position sensor 34 for detecting a brake pedal depression amount which is an operation amount of the brake pedal 24. The accelerator position sensor 32 and the brake position sensor 34 are connected to the controller 50 via the in-vehicle network.

The electric vehicle 10 further includes a pseudo gearshift 26 (shift change device) and a pseudo clutch pedal 28 (clutch operation device) as driving operation devices. A gearshift and a clutch pedal are typically provided in an engine vehicle (MT vehicle) equipped with a manual transmission (MT) for operating the MT. But of course, the electric vehicle 10 is not equipped with the MT. The pseudo gearshift 26 and the pseudo clutch pedal 28 are dummies that differ from the original gearshift and clutch pedal.

The pseudo gearshift 26 has a structure that simulates a gearshift installed in an MT vehicle, and is configured to arbitrarily select the gear stage from a plurality of gear stages. The arrangement and operating feeling of the pseudo gearshift 26 are equivalent to those of the real MT vehicle. The pseudo gearshift 26 has positions that correspond to each gear stage, for example, first-speed stage, second-speed stage, third-speed stage, fourth-speed stage, fifth-speed stage, sixth-speed stage, and neutral stage. The pseudo gearshift 26 is equipped with a shift position sensor 36 for detecting which position the pseudo gearshift 26 is in. The shift position sensor 36 is connected to the controller 50 by the in-vehicle network.

The pseudo clutch pedal 28 has a structure that simulates a clutch pedal installed in the MT vehicle. The arrangement and operating feeling of the pseudo clutch pedal 28 are equivalent to that of the real MT vehicle. That is, the pseudo clutch pedal 28 is operated by the driver when the shift change is performed by the pseudo gearshift 26. More specifically, the driver depresses the pseudo clutch pedal 28 when the driver intends to perform the shift change by the pseudo gearshift 26. When the shift change is finished, the driver stops depressing the pseudo clutch pedal 28 and returns it to its original position. The pseudo clutch pedal 28 is equipped with a clutch position sensor 38 for detecting a clutch pedal depression amount that is an operation amount of pseudo clutch pedal 28. The clutch position sensor 38 is connected to the controller 50 by the in-vehicle network.

In this way, the pseudo gearshift 26 and the pseudo clutch pedal 28 constitute a shift device for selecting a gear stage that simulates operation of a transmission (particularly, MT).

The electric vehicle 10 includes a speaker 44. The arrangement and structure of the speaker 44 are not particularly limited. The speaker 44 is connected to the controller 50 via an in-vehicle network. The speaker 44 outputs sound in accordance with a control signal from the controller 50. In particular, as will be described later, the speaker 44 outputs a pseudo engine sound that simulates an engine sound of an engine vehicle.

The electric vehicle 10 includes a traveling environment detection sensor 31 for detecting a traveling environment. The traveling environment detection sensor 31 is configured by, for example, a sensor that detects a surrounding environment, such as a camera, a radar, or a LiDAR (Light Detection and Ranging), or a sensor that detects a vehicle state, such as an IMU (Inertial Measurement Unit) or a GNSS (Global Navigation Satellite System).

The electric vehicle 10 includes an autonomous driving mode selection switch 42. The autonomous driving mode selection switch 42 is a switch for switching on and off an autonomous driving mode in which the electric vehicle 10 performs autonomous driving. When the electric vehicle 10 is in the autonomous driving mode, the electric vehicle 10 is controlled to travel in autonomous driving. Here, the autonomous driving means that at least acceleration and deceleration are automatically performed without driving operation by a driver. The autonomous driving mode may control the electric vehicle 10 such that steering is performed in response to the driver's operation and acceleration and deceleration is performed automatically. Of course, the autonomous driving mode may be a mode in which the electric vehicle 10 is controlled to travel by automatically performing both acceleration/deceleration and steering. Further, the autonomous driving mode may be a mode in which the electric vehicle is controlled to travel to a set destination. The autonomous driving mode selection switch 42 is connected to the controller 50 via the in-vehicle network.

The controller 50 is typically an electronic control unit (ECU) mounted on the electric vehicle 10. The controller 50 may be a combination of a plurality of ECUs. The controller 50 includes an interface 52, a memory 54, and a processor 56. The in-vehicle network is connected to the interface 52. The memory 54 is connected to the processor 56 and stores a computer program executable by the processor 56. The memory 54 stores various data necessary for processing executed by the processor 56. The memory 54 is configured by a recording medium such as a random-access memory (RAM), a read only memory (ROM), a solid-state drive (SSD), a hard disk drive (HDD), or the like. The computer program may be recorded in a computer-readable recording medium. The processor 56 reads the computer program and data from the memory 54 and executes various processes. The processor 56 may also be referred to as processing circuitry.

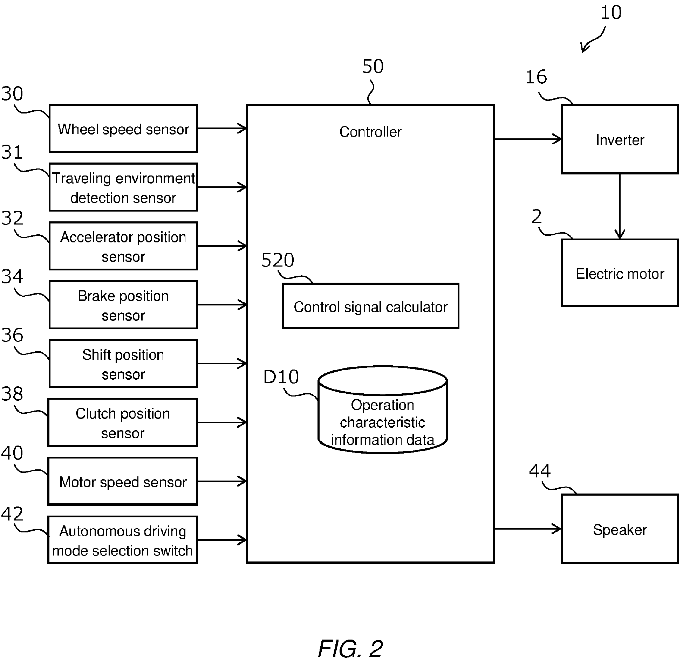

FIG. 2 is a block diagram showing a configuration of a control system of the electric vehicle 10 according to the present embodiment. The controller 50 receives inputs of signals from at least the wheel speed sensor 30, the traveling environment detection sensor 31, the accelerator position sensor 32, the brake position sensor 34, the shift position sensor 36, the clutch position sensor 38, the motor speed sensor 40, and the autonomous driving mode selection switch 42. The in-vehicle network is used for communication between these sensors and the controller 50. Although not shown in the drawings, carious other sensors may be mounted on the electric vehicle 10 and connected to the controller 50 via the in-vehicle network.

The controller 50 also outputs signals to at least the inverter 16 and the speaker 44. The in-vehicle network is used for communication between these devices and the controller 50. Although not shown in the drawings, various actuators and indicators other than these may be mounted on the electric vehicle 10, and are connected to the controller 50 by the in-vehicle network.

The controller 50 manages operation characteristic information data D10. The operation characteristic information data D10 may be stored in the memory 54. The operation characteristic information data D10 is data for managing one or more pieces of operation characteristic information. The operation characteristic information represents a characteristic of an operation related to at least one of the accelerator pedal 22 and the shift device (the pseudo gearshift 26 and the pseudo clutch pedal 28).

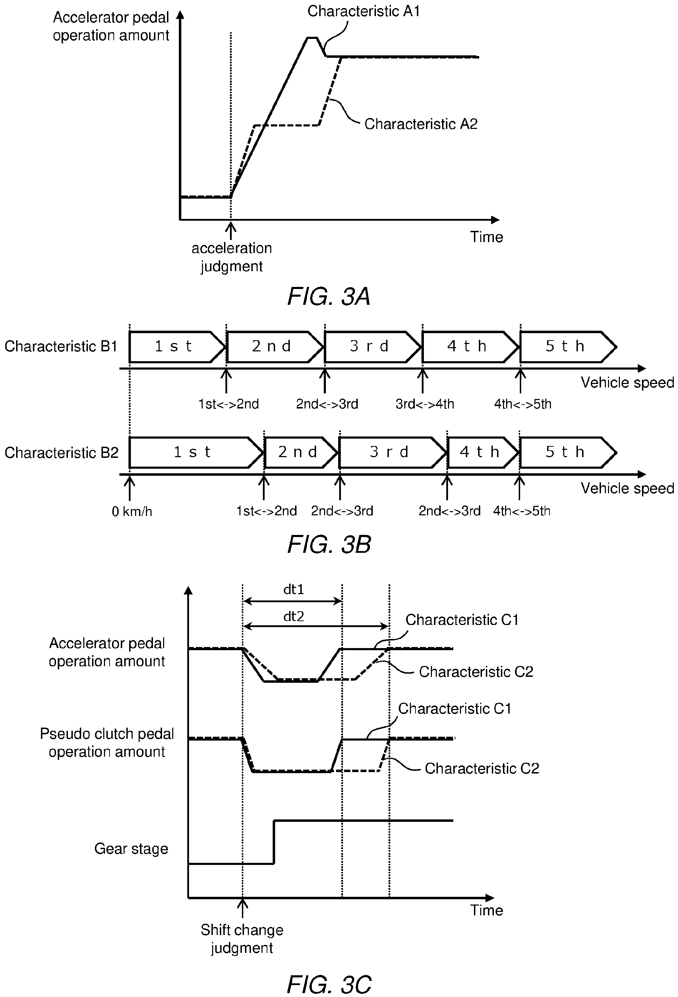

FIG. 3A, FIG. 3B, and FIG. 3C are diagrams for explaining the operation characteristic information. Examples of the characteristic represented by the operation characteristic information include a characteristic of an operation amount of the accelerator pedal 22 during acceleration, a characteristic of the timing of the shift change, and a characteristic of an operation amount of the accelerator pedal 22 and the pseudo clutch pedal 28 when performing the shift change.

The characteristic of the operation amount of the accelerator pedal 22 during acceleration can be described, for example, from the viewpoint of how the operation amount of the accelerator pedal 22 is given until the vehicle speed reaches the target vehicle speed. For example, one characteristic is that the accelerator pedal 22 is first strongly depressed, and the depression of the accelerator pedal 22 is gradually reduced as the vehicle speed approaches the target vehicle speed, thereby giving the operation amount of the accelerator pedal 22 so as to achieve the target vehicle speed (characteristic A1). Further, for another example, one characteristic is to give the operation amount of the accelerator pedal 22 so as to achieve the target vehicle speed while gradually increasing the depression of the accelerator pedal 22 (characteristic A2). FIG. 3A schematically shows the characteristics A1 and A2. These characteristics may be described in more detail. For example, the characteristic A1 can be described in more detail from the viewpoint of how much the operation amount of the accelerator pedal 22 is increased when the accelerator pedal 22 is strongly depressed. Further, for example, the characteristic A2 can be described in more detail from the viewpoint of the rate of change at which the depression of the accelerator pedal 22 is increased.

The characteristics of the timing of the shift change can be described, for example, from the viewpoint of which gear stage is selected with respect to the vehicle speed of the electric vehicle 10. FIG. 3B shows two characteristics B1 and B2 as an example of the characteristic from this viewpoint. The characteristic B 1 and the characteristic B2 respectively indicate at which speed range the five gear stages (1st, 2nd, 3rd, 4th, and 5th) are selected. The timing of the shift change is when the vehicle speed increases or decreases and the gear stage to be selected changes. The characteristic B1 indicates a characteristic where the shift change is performed in the speed range at a constant interval. On the other hand, the characteristic B2 indicates a characteristic where the shift change is performed so as to maintain the low speed gear for a longer time in the low speed range than the characteristic B1. These characteristics can be designed in various ways by changing the selection of the gear stage with respect to the vehicle speed. Further, these characteristics may be designed to have hysteresis characteristics with respect to the increasing direction and the decreasing direction of the vehicle speed.

The characteristic of the operation amount of the accelerator pedal 22 and the pseudo clutch pedal 28 when performing the shift change can be described, for example, from the viewpoint of how fast the shift change is performed. FIG. 3C shows two characteristics C1 and C2 as an example of the characteristic from this viewpoint. The characteristics C1 and C2 have different periods of the shift change. Accordingly, the characteristic C1 and the characteristic C2 are different from each other in the operation amount of the accelerator pedal 22 and the pseudo clutch pedal 28. The period d2 of the shift change of the characteristic C2 is shorter than the period d1 of the shift change of the characteristic C1. That is, the characteristic C2 indicates a characteristic in which the shift change is performed faster than the characteristic C1. These characteristics may be described in more detail. For example, the characteristics C1 and C2 can be described in more detail from the viewpoint of the rate of change at which the operation amount of the accelerator pedal 22 and the pseudo clutch pedal 28 are increased or decreased. Alternatively, the characteristic of the operation amount of the accelerator pedal 22 and the pseudo clutch pedal 28 when performing the shift change may be described from the viewpoint of how the operation amount of the accelerator pedal 22 and the pseudo clutch pedal 28 are given from the start to the completion of the shift change in order to represent a characteristic operation (for example, blipping operation) during the shift change.

Each piece of operation characteristic information managed by the operation characteristic information data D10 includes information regarding the characteristics as described above. Each piece of operation characteristic information may be information regarding a combination of these characteristics. In particular, one piece of operation characteristic information may correspond to one model driver and may be information regarding each characteristic of the model driver. For example, the operation characteristic information data D10 manages each piece of operation characteristic information as shown in the following table. In this case, each piece of operation characteristic information can be generated by analyzing actual driving operation data of the corresponding model driver. Alternatively, each piece of operation characteristic information can be generated by a machine learning model that receives actual driving operation data as an input. Each model driver is typically assumed to be a driver accustomed to driving operation of the MT vehicle. However, various drivers with different levels of driving operation skill may be assumed. Alternatively, a fictitious driver may be assumed.

Table 1:

|  | Model Operator | Characteristic #1 | Characteristic #2 | Characteristic #3 |
|---|---|---|---|---|
| Operation characteristic information 1 | XXX | characteristic A1 | characteristic B2 | characteristic C1 |
| Operation characteristic information 2 | YYY | characteristic A2 | characteristic B1 | characteristic C2 |
| Operation characteristic information 3 | ZZZ | characteristic A2 | characteristic B2 | characteristic C1 |

The data format of each piece of operation trait information may be suitably provided. For example, each piece of operation characteristic information is configured by information in which each characteristic is encoded. Further, for example, each piece of operation characteristic information is configured by information in which each characteristic is represented by a feature amount.

The controller 50 has a function as a control signal calculator 520. The control signal calculator 520 may be realized by cooperation of the memory 54 and the processor 56 that executes processing in accordance with the computer program. The control signal calculator 520 calculates a control signal for an actuator or a device. The control signal includes at least a signal for PWM-controlling the inverter 16 and a signal causing the speaker 44 to output a sound. Hereinafter, functions of the controller 50 will be described.

2. Function of Controller

2.1 Calculation of Motor Torque and Pseudo Engine Sound

The controller 50 has a function of calculating a motor torque command value and a pseudo engine sound command value. The controller 50 generates a control signal for PWM control of the inverter 16 based on the calculated motor torque command value. The controller 50 generates a control signal for controlling the output of the speaker 44 based on the calculated pseudo engine sound command value.

Here, the controller 50 acquires a signal from the autonomous driving mode selection switch 42 and determines whether or not the electric vehicle 10 is in the autonomous driving mode. In the present embodiment, the configuration of the function of the controller 50 is different between a case where the electric vehicle 10 is not in the autonomous driving mode (hereinafter, referred to as a "normal driving mode") and a case where the electric vehicle 10 is in the autonomous driving mode.

2.1.1 Normal Driving Mode

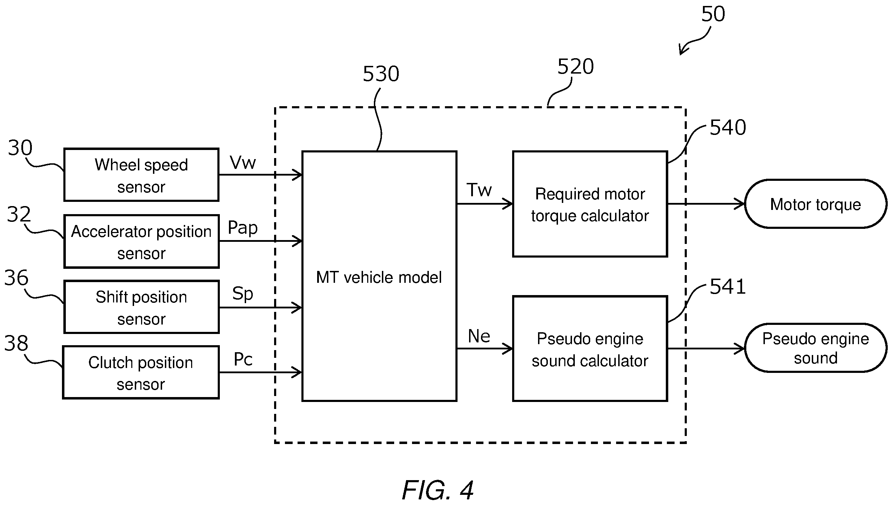

FIG. 4 is a block diagram showing a functional configuration of the controller 50 related to calculation of the motor torque command value and the pseudo engine sound command value when the electric vehicle 10 is in the normal driving mode.

As shown in FIG. 4, in the normal driving mode, the control signal calculator 520 includes a MT vehicle model 530, a required motor torque calculator 540, and a pseudo engine sound calculator 541. The control signal calculator 520 receives signals from the wheel speed sensor 30, the accelerator position sensor 32, the shift position sensor 36, and the clutch position sensor 38. The control signal calculator 520 processes signals from these sensors and calculates motor torque to be output by the electric motor 2 and a pseudo engine sound output by the speaker 44.

The MT vehicle model 530 is a model for calculating a driving wheel torque and an engine speed that should be obtained by operating the accelerator pedal 22, the pseudo clutch pedal 28, and the pseudo gearshift 26 when the electric vehicle 10 is assumed to be the MT vehicle equipped with an engine, a clutch, and a MT. The driving wheel torque in the MT vehicle is determined by the operation of a gas pedal for controlling fuel supply to the engine, the operation of a gearshift (shifter) for switching the gear stage of the MT, and the operation (clutch opening) of the clutch that connects the engine and the MT. The engine may be a spark-ignition engine or a diesel engine. The MT vehicle model 530 may be stored in the memory 54 as data. Alternatively, the MT vehicle model 530 may be realized by processes described by the computer program stored in the memory 54. Hereinafter, the engine, the clutch, and the MT virtually implemented by the MT vehicle model 530 are referred to as a virtual engine, a virtual clutch, and a virtual MT, respectively.

In the normal driving mode, the accelerator opening Pap detected by the accelerator position sensor 32 is input to the MT vehicle model 530 as the operation amount of the gas pedal of the virtual engine. Further, the shift position Sp detected by the shift position sensor 36 is input to the MT vehicle model 530 as the operation amount of the shifter of the virtual MT. Further, the clutch pedal depression amount Pc detected by the clutch position sensor 38 is input to the MT vehicle model 530. Further, a vehicle speed Vw (or wheel speed) detected by the wheel speed sensor 30 is also input to the MT vehicle model 530 as a signal indicating the vehicle load.

The MT vehicle model 530 is a model that simulates the torque characteristic of the driving wheel torque in the MT vehicle. The MT vehicle model 530 calculates the driving wheel torque Tw and the virtual engine speed Ne of the virtual engine based on the above described inputs. The MT vehicle model 530 is created such that the operation state of the accelerator pedal 22, the pseudo gearshift 26, and the pseudo clutch pedal 28 are reflected in the driving wheel torque Tw and the virtual engine speed Ne. The MT vehicle model 530 will be described in detail later.

The required motor torque calculator 540 converts the driving wheel torque Tw calculated by the MT vehicle model 530 into required motor torque. The required motor torque is motor torque required to realize the driving wheel torque Tw calculated by the MT vehicle model 530. A reduction ratio from the output shaft 3 of the electric motor 2 to the driving wheels 8 is used to convert the driving wheel torque Tw into the required motor torque. The required motor torque calculated by the required motor torque calculator 540 is the motor torque command value.

The pseudo engine sound calculator 541 generates a pseudo engine sound using the virtual engine speed Ne calculated by the MT vehicle model 530 as a parameter. For example, the pseudo engine sound calculator 541 generates a pseudo engine sound by combining sound source files selected from sound source file data according to the calculated virtual engine speed Ne. In this case, the sound source file data includes a plurality of sound source files prepared for each level of the engine rotation speed for each of a plurality of types of sounds such as a sound related to combustion in an engine and a sound related to operation of a drive system such as a power train. The sound source file data may include a sound source file of a sound that does not depend on the engine rotation speed, such as a noise sound or a sound related to the occurrence of a specific event (for example, an engine stall). The sound source file data may be stored in the memory 54. The pseudo engine sound generated by the pseudo engine sound calculator 541 is the pseudo engine sound command value.

The pseudo engine sound calculator 541 may be configured to generate a pseudo engine sound using an engine torque of an engine model of the MT vehicle model 530 as a parameter. The engine model and the engine torque in the MT vehicle model 530 will be described later. In this case, the pseudo engine sound calculator 541 may be configured to generate a pseudo engine sound using, for example, a map in which the virtual engine speed Ne and a frequency are associated with each other and a map in which the engine torque and a sound pressure are associated with each other. At this time, the pseudo engine sound calculator 541 increases or decreases the frequency of the pseudo engine sound in proportion to the virtual engine speed Ne, and increases or decreases the sound pressure in proportion to the engine torque.

As described above, in the normal driving mode, the controller 50 calculates the motor torque command value and the pseudo engine sound command value using the MT vehicle model based on the actual operation states of the accelerator pedal 22, the pseudo gearshift 26, and the pseudo clutch pedal 28 operated by a driver. Then, the controller 50 controls the inverter 16 and the speaker 44 based on the calculated motor torque command value and the pseudo engine sound command value. In this way, in the normal driving mode, the controller 50 changes the motor torque output by the electric motor 2 and the pseudo engine sound output by the speaker 44 in response to the actual operation states of the accelerator pedal 22, the pseudo gearshift 26, and the pseudo clutch pedal 28 operated by the driver. As a result, in the normal driving mode, the driver can enjoy driving characteristics and an engine sound as in a MT vehicle.

2.1.2 Autonomous Driving Mode

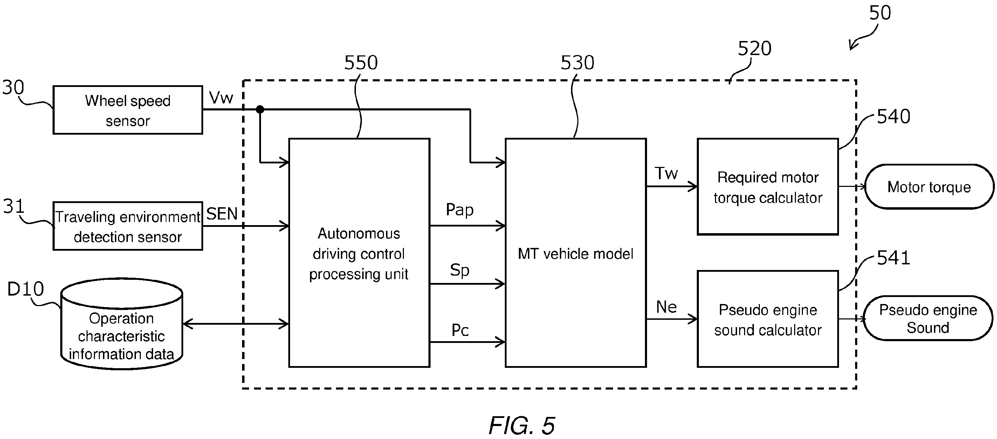

FIG. 5 is a block diagram showing a functional configuration of the controller 50 related to calculation of the motor torque command value and the pseudo engine sound command value when the electric vehicle is in the autonomous driving mode.

As shown in FIG. 5, in the autonomous driving mode, the control signal calculator 520 further includes an autonomous driving control processing unit 550 in addition to the configuration in the normal driving mode. The control signal calculator 520 receives signals from the wheel speed sensor 30 and the traveling environment detection sensor 31. In addition, the control signal calculator 520 refers to the operation characteristic information data D10.

The autonomous driving control processing unit 550 calculates various control amounts for the electric vehicle 10 to travel in an autonomous driving. The vehicle speed Vw detected by the wheel speed sensor 30 and detection information SEN detected by the traveling environment detection sensor 31 are input to the autonomous driving control processing unit 550. The detection information SEN includes, for example, information (position, speed, type, and the like) of an object (a vehicle, a pedestrian, a road marking, a sign, and the like) detected in the surroundings, GNSS position information, posture information, and the like. Map information (not shown in FIG. 5) may be further input to the autonomous driving control processing unit 550.

The autonomous driving control processing unit 550 generates a driving plan related to autonomous driving based on these pieces of information. The generated driving plan may be appropriately configured according to the content of the autonomous driving. For example, when only acceleration or deceleration is automatically performed, the driving plan may be configured by determination of acceleration or deceleration, a target vehicle speed, and the like. Further, for example, when both acceleration/deceleration and steering are automatically performed, the driving plan may be configured by a traveling trajectory, a target vehicle speed on the traveling trajectory, and the like.

The autonomous driving control processing unit 550 calculates various control amounts such that the electric vehicle 10 travels according to the generated driving plan. In particular, the autonomous driving control processing unit 550 calculates an accelerator opening Pap, a shift position Sp, and a clutch pedal depression amount Pc as the control amounts related to driving of the electric vehicle 10. That is, the autonomous driving control processing unit 550 virtually determines the operation state of the accelerator pedal 22, the pseudo gearshift 26, and the pseudo clutch pedal 28 when causing the electric vehicle 10 to travel according to the driving plan.

The autonomous driving control processing unit 550 uses the operation characteristic information to determine the virtual operation state. The autonomous driving control processing unit 550 selects and acquires operation characteristic information from one or more pieces of operation characteristic information managed by the operation characteristic information data D10. The autonomous driving control processing unit 550 may determine the operation characteristic information to be selected in response to a request from a driver. In this case, the controller 50 may be configured to receive an input of the request from the driver. For example, the controller 50 presents the driver with a list of one or more pieces of operation characteristic information (or a list of corresponding model drivers) managed by the operation characteristic information data D10. The driver inputs a request for desired operation characteristic information (or a desired model driver) with reference to the presented list. The controller 50 stores the input request in the memory 54. The autonomous driving control processing unit 550 selects operation characteristic information based on the input request.

The autonomous driving control processing unit 550 determines the virtual operation state based on the selected operation characteristic information. For example, consider a case where the generated driving plan indicates accelerating the electric vehicle 10 from a current vehicle speed (e.g., 20 km/h) to a target vehicle speed (e.g., 50 km/h). Further, it is also assumed that the selected operation characteristic information is "Operation characteristic information 2" in Table 1. At this time, the autonomous driving control processing unit 550 determines the operation state of the accelerator pedal 22 such that the depression is gradually increased until the vehicle speed reaches the target vehicle speed in accordance with the characteristic A2 (see FIG. 3A), and calculates the accelerator opening Pap. And the autonomous driving control processing unit 550 determines the operation state of the pseudo gearshift 26 (timing of the shift change) according to the characteristic B1 (see FIG. 3B), and calculates the shift position Sp. And, when performing the shift change, the autonomous driving control processing unit 200 determines the operation state of the accelerator pedal 22 and the pseudo clutch pedal 28 according to the characteristic C2 (see FIG. 3C), and calculates the accelerator opening Pap and the clutch pedal depression amount Pc.

In this way, the autonomous driving control processing unit 550 can virtually determine the various operation state of the accelerator pedal 22, the pseudo gearshift 26, and the pseudo clutch pedal 28 according to the selected operation characteristic information.

The autonomous driving control processing unit 550 may be configured to calculate other control amounts (not shown in FIG. 5) in accordance with the generated driving plan. For example, the autonomous driving control processing unit 550 may calculate a control amount for a braking system as a control amount related to braking of the electric vehicle 10. Further, for example, the autonomous driving control processing unit 550 may calculate a control amount for a steering system as a control amount related to operation of the electric vehicle 10.

In the autonomous driving mode, the driving wheel torque Tw and the virtual engine speed Ne of the virtual engine are calculated by the MT vehicle model 530. In particular, the MT vehicle model 530 may be the same between the normal driving mode and the autonomous driving mode. However, in the autonomous driving mode, the accelerator opening Pap calculated by the autonomous driving control processing unit 550 is input to the MT vehicle model 530 as the operation amount of the gas pedal of the virtual engine. Further, the shift position Sp calculated by the autonomous driving control processing unit 550 is input to the MT vehicle model 530 as the operation amount of the shifter of the virtual MT. Further, the clutch pedal depression amount Pc calculated by the autonomous driving control processing unit 550 is input to the MT vehicle model 530. Further, as in the normal driving mode, the vehicle speed Vw (or the wheel speed) detected by the wheel speed sensor 30 is also input to the MT vehicle model 530 as a signal indicating the load state of the vehicle.

The MT vehicle model 530 calculates the driving wheel torque Tw and the virtual engine speed Ne based on the above described inputs.

The processing of the required motor torque calculator 540 and the pseudo engine sound calculator 541 may be the same as in the normal driving mode. That is, the required motor torque calculator 540 converts the driving wheel torque Tw calculated by the MT vehicle model 530 into the required motor torque. The pseudo engine sound calculator 541 generates a pseudo engine sound using the virtual engine speed Ne calculated by the MT vehicle model 530 as a parameter.

As described above, in the autonomous driving mode, the controller 50 virtually determines the operation state of the accelerator pedal 22, the pseudo gearshift 26, and the pseudo clutch pedal 28 using the selected operation characteristic information so as to achieve the driving plan related to the autonomous driving. The controller 50 calculates a motor torque command value and a pseudo engine sound command value using the MT vehicle model based on the virtual operation state. The controller 50 controls the inverter 16 and the speaker 44 based on the calculated motor torque command value and the pseudo engine sound command value. In this way, in the autonomous driving mode, the controller 50 determines the virtual operation state, and changes the motor torque output by the electric motor 2 and the pseudo engine sound output by the speaker 44 in response to the virtual operation state. As a result, in the autonomous driving mode, the driver can enjoy driving characteristics and an engine sound of a MT vehicle, as in the normal driving mode. In particular, the driver can enjoy the driving characteristics and the engine sound corresponding to various operation characteristics by switching the operation characteristic information to be selected. Further, for example, the driver can feel the driving characteristics and the engine sound by the driving operation with high skill by selecting the operation characteristic information that represent the operation characteristic of the skilled model driver. As a result, it can be expected to improve the skill of the driver.

In the autonomous driving mode, the controller 50 may be configured to change only one of the motor torque output from the electric motor 2 and the pseudo engine sound output from the speaker 44 in response to the virtual operation state. For example, when only the motor torque is changed in response to the virtual operation state, the pseudo engine sound is generated according to a predetermined algorithm without depending on the virtual engine speed Ne. Alternatively, the output of the pseudo engine sound from the speaker 44 is stopped in the autonomous driving mode. Further, for example, when only the pseudo engine sound is changed in response to the virtual operation state, the motor torque is generated by the autonomous driving control processing unit 550 in accordance with a predetermined algorithm. The controller 50 may be configured to switch between these patterns in accordance with the driver's selection.

2.2 MT Vehicle Model

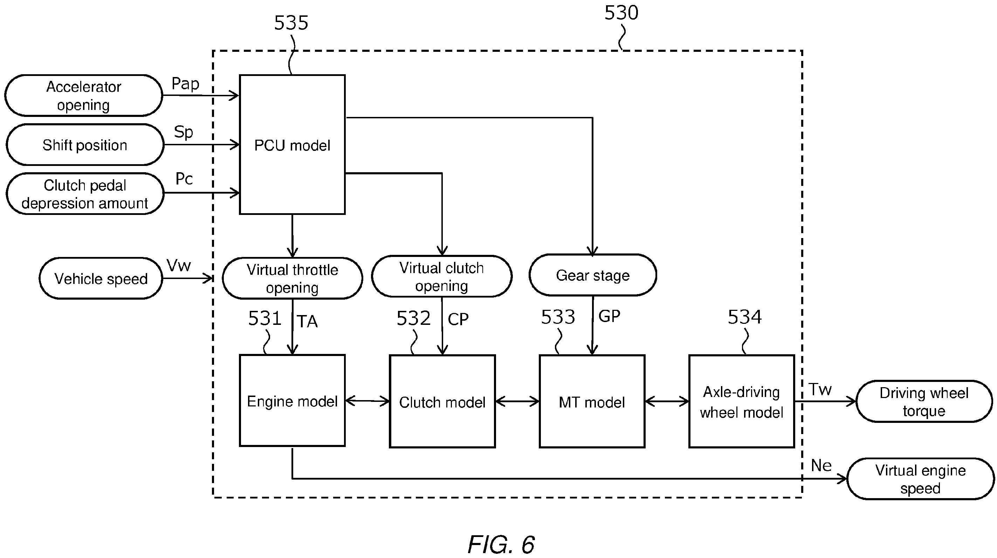

Hereinafter, the MT vehicle model 530 will be described in detail. FIG. 6 is a block diagram showing an example of the MT vehicle model 530. The MT vehicle model 530 includes an engine model 531, a clutch model 532, an MT model 533, an axle-driving wheel model 534, and a PCU model 535. In the engine model 531, a virtual engine is modeled. In the clutch model 532, a virtual clutch is modeled. In the MT model 533, a virtual MT is modeled. In the axle-driving wheel model 534, a virtual torque transmission system from the axle to the driving wheels is modeled. In the PCU model 535, some functions of a virtual plant control unit (PCU) that integrally controls the virtual engine, the virtual clutch, and the virtual MT are modeled. Each model may be represented by, for example, a calculation formula or a map.

Calculation results are input and output between the models. The accelerator opening Pap, the shift position Sp, and the clutch pedal depression amount Pc input to the MT vehicle model 530 are used by the PCU model 535. The vehicle speed Vw (or wheel speed) is used in a plurality of models.

The PCU model 535 calculates a virtual throttle opening TA of the virtual engine, a virtual clutch opening CP of the virtual clutch, and a gear stage GP of the virtual MT.

The virtual throttle opening TA is associated with the accelerator opening Pap, and the virtual throttle opening TA is increased as the accelerator opening Pap increases. The virtual throttle opening TA output from the throttle opening model is input to the engine model 531. The virtual clutch opening CP is associated with the clutch pedal depression amount Pc, and is calculated to be larger as the clutch pedal depression amount Pc increases. The virtual clutch opening CP is input to the clutch model 532. The gear stage GP is associated with the shift position Sp, and the gear stage is set according to the shift position Sp. The gear stage GP is input to the MT model 533.

The engine model 531 calculates a virtual engine speed Ne. The virtual engine speed Ne is calculated, for example, by the following equation (1). In the following equation (1), the virtual engine speed Ne is calculated from a rotation speed Nw of the driving wheel 8, a total reduction ratio R, and a slip ratio Rslip of the virtual clutch. In the equation (1), the rotation speed Nw of the driving wheel 8 is detected by the wheel speed sensor 30. The total reduction ratio R is calculated from the gear ratio (transmission gear ratio) r calculated by the MT model 533 described later and the reduction ratio defined by the axle-driving wheel model 534. The slip ratio Rslip is calculated by the clutch model 532 described later.
Formula 1:

$$Ne = Nw \times R \times \frac{1}{1 - Rslip} \cdots (1)$$

The equation (1) is a calculation equation of the virtual engine speed Ne in a state in which the virtual engine and the virtual MT are connected by the virtual clutch. When the virtual clutch is disengaged, the virtual engine torque Te generated by the virtual engine is torque obtained by adding torque due to the moment of inertia to the virtual engine output torque Teout. When the virtual clutch is disengaged, the virtual engine output torque Teout is zero. Therefore, when the virtual clutch is disengaged, the engine model 531 calculates the virtual engine speed Ne by the following equation (2) using the virtual engine torque Te and an inertia moment J of the virtual engine. A map using the virtual throttle opening TA as a parameter is used for calculation of the virtual engine torque Te.
Formula 2:

$$J \times \frac{30}{\pi} \times \frac{d}{dt} Ne = Te \cdots (2)$$

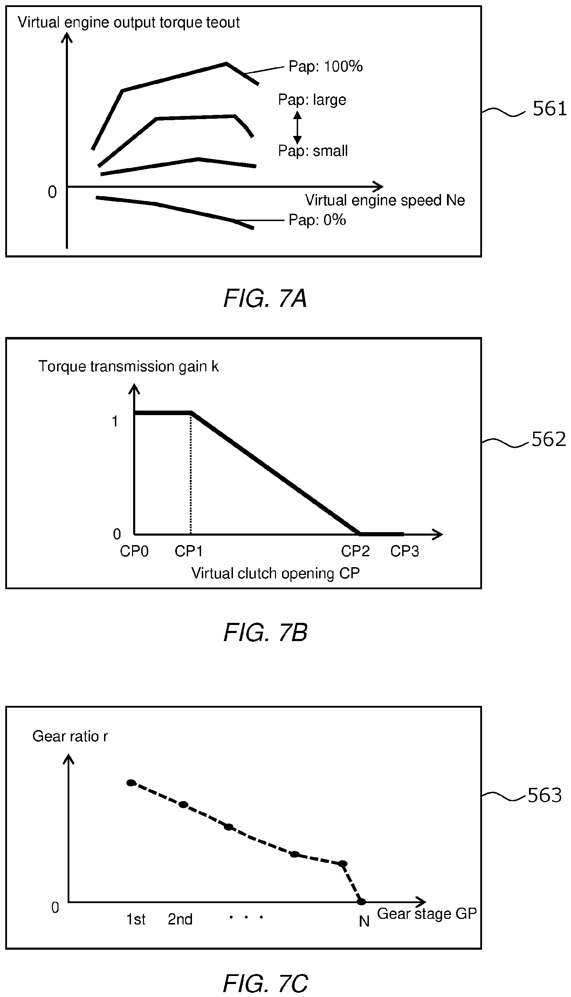

The engine model 531 further calculates the virtual engine output torque Teout. The virtual engine output torque Teout can be calculated from the virtual engine speed Ne and the accelerator opening Pap. A map 561 as shown in FIG. 7A is used for the calculation of the virtual engine output torque Teout. The map 561 defines the relationship between the accelerator opening Pap, the virtual engine speed Ne, and the virtual engine output torque Teout. In the map 561, the virtual engine output torque Teout with respect to the virtual engine speed Ne is given for each accelerator opening Pap. The torque characteristic shown in the map 561 can be set to a characteristic assuming a gasoline engine or can be set to a characteristic assuming a diesel engine. Further, the torque characteristic shown in the map 561 can be set to a characteristic assuming a naturally aspirated engine or can be set to a characteristic assuming a supercharged engine.

The clutch model 532 calculates a torque transmission gain k. The torque transmission gain k is a gain for calculating a torque transmission rate of the virtual clutch corresponding to the virtual clutch opening CP. The clutch model 532 has a map 562 as shown in FIG. 7B, for example. In this map 562, the torque transmission gain k is given to the virtual clutch opening CP. CP0 corresponds to a clutch opening of 0%, and CP3 corresponds to a clutch opening of 100%. The range from CP0 to CP1 and the range from CP2 to CP3 are dead zones in which the torque transmission gain k does not change depending on the virtual clutch opening CP.

The clutch model 532 further calculates clutch output torque Teout using the torque transmission gain k. The clutch output torque Teout is torque output from the virtual clutch. The clutch output torque Teout is calculated, for example, by the following equation (3).
Formula 3:

$$Tcout = Teout \times k \cdots (3)$$

The clutch model 532 further calculates a slip ratio Rslip. The slip ratio Rsilip can be calculated using a map that gives the slip ratio Rslip with respect to the virtual clutch opening CP, similarly to the torque transmission gain k.

The MT model 533 calculates a gear ratio r. The gear ratio r is determined by the gear stage. The MT model 533 has a map 563 as shown in FIG. 7C, for example. In this map 563, the gear ratio r is given for the gear stage GP.

The MT model 533 further calculates transmission output torque Tgout using the gear ratio r. The transmission output torque Tgout is torque output from the virtual MT. The clutch output torque Tcout is calculated, for example, by the following equation (4). The transmission output torque Tgout changes discontinuously in response to switching of the gear ratio. A gear shift shock is generated by the discontinuous change in the transmission output torque Tgout, creating the feeling of a vehicle with a stepped transmission.

Formula 4:

$$Tgout = Tcout \times r \cdots (4)$$

The axle-driving wheel model 534 calculates the driving wheel torque Tw using a preset reduction ratio rr. The reduction ratio rr is a fixed value determined by a mechanical structure from the virtual MT to the driving wheel 8. A value obtained by multiplying the reduction ratio rr by the gear ratio r is the above-mentioned total reduction ratio R. The driving wheel torque Tw is calculated, for example, by the following equation (5).

Formula 5:

$$Tw = Tgout \times rr \cdots (5)$$

2.3 Torque Characteristics of Electric Motor Implemented in Clutch Pedal-less MT Vehicle Model

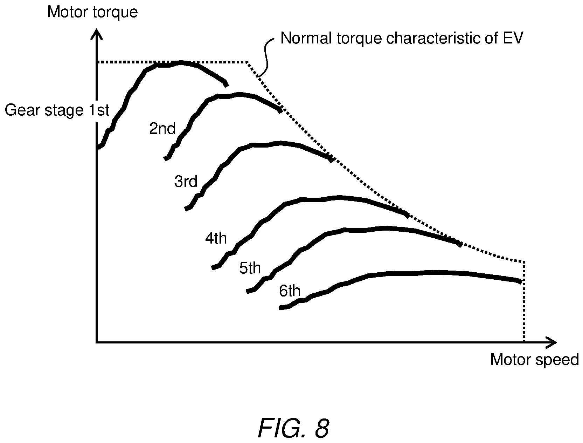

As described above, the required motor torque calculator 540 converts the driving wheel torque Tw calculated by the MT vehicle model 530 into motor torque. FIG. 8 is a diagram showing the torque characteristic of the electric motor 2 implemented by the motor control using the MT vehicle model 530 in comparison with the torque characteristic of the electric motor 2 implemented by the normal motor control for an electric vehicle (EV). According to the motor control using the MT vehicle model 530, as shown in FIG. 8, a torque characteristic (solid line in the drawing) simulating the torque characteristic of the MT vehicle can be implemented in accordance with the gear stage selected by operation of the shift device.

3 Modification

The electric vehicle 10 according to the present embodiment may be modified as follows. In the following description, differences from the above- escribed embodiment will be mainly described, and the contents common to the above described embodiment will be appropriately omitted.

3.1 First Modification

The shift device provided in the electric vehicle 10 may be configured by a sequential shifter that selects a gear stage by an upshift operation and a downshift operation, instead of the pseudo gearshift 26 and the pseudo clutch pedal 28.

3.1.1 Configuration of Electric Vehicle

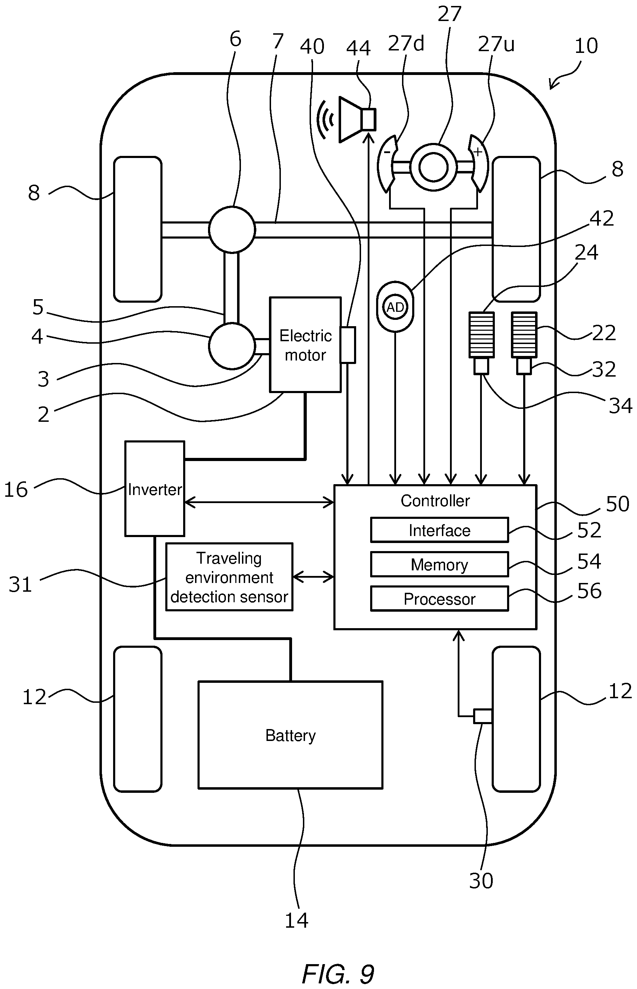

FIG. 9 is a diagram schematically showing a configuration of the electric vehicle 10 according to the first modification. As shown in FIG. 9, in the first modification, the electric vehicle 10 includes a pseudo paddle shifter 27 (sequential shifter) instead of the pseudo gearshift 26 and the pseudo clutch pedal 28. In a MT vehicle, a paddle shifter is usually provided for operating a MT, in particular a sequential manual transmission (SMT). The pseudo paddle shifter 27 is a dummy different from the original paddle shifter provided in the MT vehicle. In general, the MT vehicle including the sequential shifter is a clutch pedal less MT vehicle that does not include a clutch pedal.

The pseudo paddle shifter 27 has a structure similar to that of a paddle shifter installed in a clutch pedal-less MT vehicle. The pseudo paddle shifter 27 is attached to the steering wheel. The pseudo paddle shifter 27 includes an upshift switch 27u and a downshift switch 27d. The upshift switch 27u is provided on the right side of the steering wheel, and the downshift switch 27d is provided on the left side of the steering wheel. The upshift switch 27u and the downshift switch 27d can be operated independently. The upshift switch 27u generates a signal when pulled forward, and the downshift switch 27d as generates a signal when pulled forward. Hereinafter, the operation of pulling the downshift switch forward is referred to as upshift operation, and the signal generated by the downshift switch gox in response to the downshift operation is referred to as a downshift signal. Further, the operation of pulling the downshift switch forward is referred to as downshift operation, and the signal generated by the downshift switch gox in response to the downshift operation is referred to as a downshift signal. The upshift switch element and the downshift switch element are connected to the controller 50 via the in-vehicle network. 27u 27d 27d 27u 27d 27u

As described above, in the first modification, the shift device is configured by the pseudo paddle shifter 27. As a similar configuration, the shift device may be configured by a lever type sequential shifter.

The configuration of the control system according to the first modification is a configuration in which the shift position sensor 36 and the clutch position sensor 38 are replaced with the upshift switch 27u and the downshift switch 27d in the configuration shown in FIG. 2. That is, the controller 50 receives signals from the upshift switch 27u and the downshift switch 27d instead of the shift position sensor 36 and the clutch position sensor 38.

Further, the characteristic represented by the respective operation characteristic information managed by the operation characteristic information data D10 correspond to the difference in the shift device. Therefore, the characteristic represented by the operation characteristic information include a characteristic of an operation amount of the accelerator pedal 22 during acceleration and a characteristic of a timing of an upshift operation or a downshift operation.

The characteristic of the operation amount of the accelerator pedal 22 during acceleration can be described in the same manner as described in FIG. 3A. The characteristic of the timing of the upshift operation or the downshift operation can be described in the same manner as described in FIG. 3B. That is, the characteristic of the timing of the upshift operation or the downshift operation can be described from the viewpoint of which gear stage is selected with respect to the vehicle speed of the electric vehicle 10. In this case, the timing of the upshift operation is when the vehicle speed increases and the selected gear stage is raised. The timing of the downshift operation is when the vehicle speed decreases and the selected gear stage is lowered.

3.1.2 Function of Controller

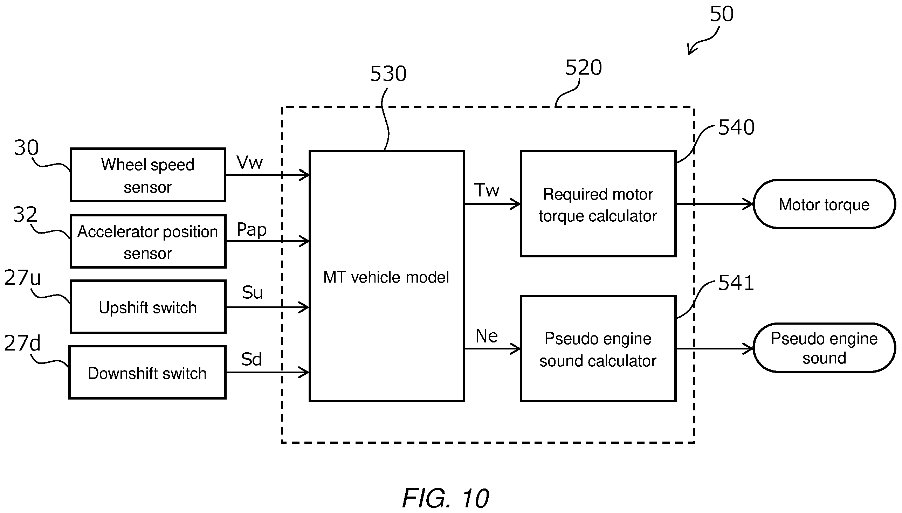

FIG. 10 is a block diagram showing a functional configuration of the controller 50 related to the calculation of the motor torque command value and the pseudo engine sound command value when the electric vehicle 10 according to the first modification is in the normal driving mode.

As shown in FIG. 10, in the first modification, the shift position sensor 36 and the clutch position sensor 38 in the configuration shown in FIG. 4 are replaced with the upshift switch 27u and the downshift switch 27d. The MT vehicle model 530 may be a model for calculating the driving wheel torque Tw and the virtual engine speed Ne that should be obtained by operating the accelerator pedal 22 and the pseudo paddle shifter 27 when the electric vehicle 10 is assumed to be a clutch pedal less MT vehicle. The clutch pedal less MT vehicle is an MT vehicle that does not include a clutch pedal because a clutch is automatically operated. A driving wheel torque of the clutch pedal less MT vehicle is determined by operation of a gas pedal that controls fuel supply to a virtual engine and operation of a shifter that switches gear stages of SMT (virtual SMT).

Therefore, in the normal driving mode according to the first modification, the accelerator opening Pap detected by the accelerator position sensor 32 is input to the MT vehicle model 530 as an operation amount of the gas pedal of the virtual engine. Further, the MT vehicle model 530 receives an upshift signal Su transmitted from the upshift switch 27u and a downshift signal Sd transmitted from the downshift switch 27d as operation amounts of a shifter that determine the gear stage of the virtual SMT.

The MT vehicle model 530 according to the first modification can be configured in the same manner as that shown in FIG. 6. However, the PCU model 535 calculates the virtual throttle opening TA, the virtual clutch opening CP, and the gear stage GP of the virtual SMT based on the accelerator opening Pap, the upshift signal Su, the downshift signal Sd, and the vehicle speed Vw.

The virtual throttle opening TA is associated with the accelerator opening Pap, and the virtual throttle opening TA is increased as the accelerator opening Pap increases. When the upshift signal Su is input and when the downshift signal Sd is input, the virtual throttle opening TA may be temporarily decreased regardless of the accelerator opening Pap. This means that the virtual throttle is temporarily closed when the shift operation of the pseudo paddle shifter 27 is performed.

The virtual clutch opening CP is basically set to 0%. When the upshift signal Su is input and when the downshift signal Sd is input, the virtual clutch opening CP is temporarily set to 100%. This means that the virtual clutch is temporarily released when the shift operation of the pseudo paddle shifter 27 is performed. The vehicle speed Vw and the virtual engine speed Ne are used for calculation of the virtual clutch opening CP when the virtual clutch is engaged. The virtual clutch opening CP is calculated based on the rotation speed difference so that the rotation speed of the input shaft of the virtual MT calculated from the vehicle speed Vw and the virtual engine speed Ne smoothly coincide with each other.

The gear stage GP is raised by one stage each time the upshift signal Su is input. However, when the gear stage GP is the maximum gear stage, the gear stage is maintained. Further, the gear stage GP is lowered by one stage each time the downshift signal Sd is input. However, when the gear stage GP is the minimum gear stage, the gear stage is maintained.

The functional configuration of the controller 50 related to the calculation of the motor torque command value and the pseudo engine sound command value when the electric vehicle 10 according to the first modification is in the normal driving mode may be the same as that shown in FIG. 5. However, in the autonomous driving mode according to the first modification, the autonomous driving control processing unit 550 is configured to virtually determine the operation state of the accelerator pedal 22 and the pseudo paddle shifter 27 and calculate the accelerator opening Pap, the upshift signal Su, and the downshift signal Sd. In the autonomous driving mode according to the first modification, the autonomous driving control processing unit 550 also determines the virtual operation state based on the selected operation characteristic information. The autonomous driving control processing unit 550 may virtually determine various operation states of the accelerator pedal 22 and the pseudo paddle shifter 27 according to the selected operation characteristic information.

The electric vehicle 10 according to the first modification is configured as described above. Even in the case of adopting the first modification, the same effects as those of the above described embodiment can be obtained.

3.2 Second Modification

In the electric vehicle 10 according to the embodiment, the pseudo engine sound is output from the speaker 44 during traveling. The pseudo engine sound is conceivable to give the driver a sense of elation. The attraction of the pseudo engine sound output from the speaker 44 is indicated by the degree of the elation given to the driver. That is, the attraction of the pseudo engine sound is improved by increasing the sense of elation given to the driver.

The inventor of the present disclosure has focused on the fact that the driver feels a greater sense of elation when the tone of driver's biological state (heart rate, pulse, body temperature, blood pressure, etc.) is linked to the sound that the driver hears. Therefore, in order to increase the elation given to the driver, the controller 50 according to the embodiment can be configured to further change the pseudo engine sound based on the biological state of the driver.

In the control system according to the second modification, the controller 50 further receives a signal from a biological state detection sensor for detecting the biological state of the driver. The controller 50 acquires the biological state of the driver from the signal of the biological state detection sensor. The biological state detection sensor is configured by a heart rate sensor for detecting a heart rate, a pulse wave sensor for detecting a pulse, a body temperature sensor for detecting a body temperature, a blood pressure sensor for detecting a blood pressure, and the like. The biological state detection sensor is built in, for example, a steering wheel, and is configured to be able to detect the biological state of the driver who holds the steering wheel. Alternatively, the biological state detection sensor may be built in a wearable device worn by the driver.

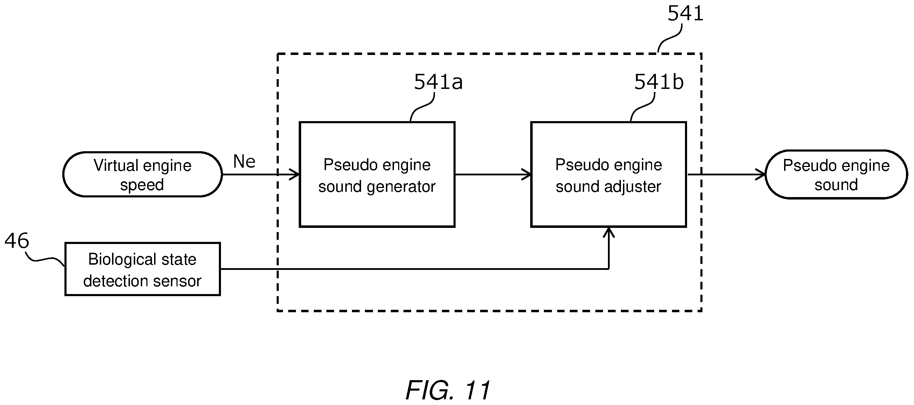

The controller 50 according to the second modification can be configured by appropriately changing the pseudo engine sound calculator 541. FIG. 11 is a block diagram showing an example of the configuration of the pseudo engine sound calculator 541 for realizing the controller 50 according to the second modification. The pseudo engine sound calculator 541 is configured by a pseudo engine sound generator 541a and a pseudo engine sound adjuster 541b.

The pseudo engine sound generator 541a generates a pseudo engine sound using the virtual engine speed Ne as a parameter. The pseudo engine sound generator 541a may be configured to generate the pseudo engine sound by the method described in the above embodiment. The pseudo engine sound generated by the pseudo engine sound generator 541a is input to the pseudo engine sound adjuster 541b.

Information on the biological state of the driver detected by the biological state detection sensor 46 is input to the pseudo engine sound adjuster 541b. The pseudo engine sound adjuster 541b adjusts the pseudo engine sound generated by the pseudo engine sound generator 541a based on the biological information of the driver. For example, the frequency (or sound pressure) of the pseudo engine sound is increased when the heart rate or the pulse pace is fast, and the frequency (or sound pressure) of the pseudo engine sound is decreased when the pace is slow. Further, for example, when the body temperature is rising, the frequency (or sound pressure) of the pseudo engine sound may be increased. Further, for example, a base sound corresponding to the heart rate or the pace of the pulse may be added to the pseudo engine sound. Further, for example, the mood or emotion of the driver may be determined from various biological states, and the tone, frequency, or sound pressure of the pseudo engine sound may be changed, or an additional sound may be added, in accordance with the determined mood or emotion.

The pseudo engine sound calculator 541 outputs the pseudo engine sound adjusted by the pseudo engine sound adjuster 541b.

As described above, according to the second modification, the controller 50 changes the pseudo engine sound based on the biological state of the driver. This makes it possible to improve the attraction of the pseudo engine sound output from the speaker 44.

3.3 Third Modification

The electric vehicle 10 may be configured to be switchable to an EV mode in which the electric vehicle 10 travels under normal motor control as an EV, according to the driver's selection. When the EV mode is selected, the controller 50 may be configured to stop the output of the pseudo engine sound from the speaker 44. Further, when the EV mode is selected, the controller 50 may be configured to, in the normal driving mode, change the motor torque output from the electric motor 2 in accordance with the operation state of the accelerator pedal 22 operated by the driver, regardless of the operation state of the shift device. Further, when the EV mode is selected, the controller 50 may be configured to, in the autonomous driving mode, change the motor torque output from the electric motor 2 in accordance with a predetermined control algorithm, regardless of the virtual operation state. According to the third modification, the driver can enjoy the normal driving characteristics as the EV.

4. Others

The electric vehicle 10 according to the above embodiment is an FF vehicle in which the front wheels are driven by the single electric motor 2. However, the technical features of the present embodiment can also be applied to an electric vehicle in which two electric motors are disposed on the front and rear sides to respectively drive the front wheels and the rear wheels. Abd the technical features of the present embodiment are also applicable to an electric vehicle including an in-wheel motor in each wheel. A model of an all-wheel drive vehicle with a MT can be used as the MT vehicle model in these cases.

The electric vehicle 10 according to the above embodiment is not provided with a transmission. However, the technical features of the present embodiment are also applicable to an electric vehicle having a stepped or continuously variable automatic transmission. In this case, the power train including the electric motor and the automatic transmission may be controlled so as to output the motor torque calculated by the MT vehicle model.

The technical features of the present embodiment are not limited to the battery electric vehicle, and are widely applicable to any electric vehicle that uses an electric motor as a power unit for traveling. For example, the technical features of the present embodiment can be applied to a hybrid electric vehicle (HEV) or a plug-in hybrid electric vehicle (PHEV) having a mode in which the vehicle travels only by driving force of an electric motor. In addition, the technical features of the present embodiment can be applied to a fuel cell electric vehicle (FCEV) that supplies electric energy generated by a fuel cell to an electric motor.

**Claims**

**1.** An electric vehicle (10) that uses an electric motor (2) as a power unit for traveling, being configured to be switchable to an autonomous driving mode in which at least acceleration and deceleration are automatically performed without driving operation by a driver, the electric vehicle (10) comprising:

an accelerator pedal (22);
a shift device for selecting a gear stage (GP) that simulates operation of a transmission;
a speaker (44) that outputs a pseudo engine sound that simulates an engine sound; and
a controller (50),
wherein the controller (50) is configured to:

when the electric vehicle (10) is not in the autonomous driving mode, change a motor torque output by the electric motor (2) and the pseudo engine sound in response to an operation state of the accelerator pedal (22) and the shift device operated by the driver; and
when the electric vehicle (10) is in the autonomous driving mode, virtually determine the operation state of the accelerator pedal (22) and the shift device and change at least one of the motor torque output by the electric motor (2) and the pseudo engine sound in response to the virtual operation state.

**2.** The electric vehicle (10) according to claim 1,
wherein the controller (50) is further configured to:

manage one or more pieces of operation characteristic information representing a characteristic of an operation related to at least one of the accelerator pedal (22) and the shift device; and
when the electric vehicle (10) is in the autonomous driving mode, determine the virtual operation state based on operation characteristic information selected from the one or more pieces of operation characteristic information.

3. The electric vehicle (10) according to claim 1 or 2,
   wherein the shift device is configured by:

   a shift change device configured to arbitrarily select the gear stage (GP) from a plurality of gear stages; and
   a clutch operation device that simulates operation of a clutch and is operated by the driver when performing a shift change with the shift change device.

4. The electric vehicle (10) according to claim 3 taken in combination with claim 2,
   wherein each of the one or more pieces of operation characteristic information includes information related to at least one of a characteristic of an operation amount of the accelerator pedal (22) during acceleration, a characteristic of a timing of the shift change, and a characteristic of an operation amount of the accelerator pedal (22) and the clutch operation device when performing the shift change.

5. The electric vehicle (10) according to any one of claims 1 to 4,
   wherein the shift device is configured by a sequential shifter that selects the gear stage (GP) by an upshift operation and a downshift operation.

6. The electric vehicle (10) according to claim 5 taken in combination with claim 2,
   wherein each of the one or more pieces of operation characteristic information includes information related to at least one of a characteristic of an operation amount of the accelerator pedal (22) during acceleration and a characteristic of a timing of the upshift operation or the downshift operation.

7. The electric vehicle (10) according to any one of claims 1 to 6,

   wherein the controller (50) comprises:

   one or more memories (54) storing a MT vehicle model (530); and
   one or more processors (56) connected to the one or more memories (54), the MT vehicle model (530) is a model simulating a torque characteristic of drive wheel torque (Tw) in a MT vehicle including an internal combustion engine in which an engine torque is controlled by operation of a gas pedal, a manual transmission in which a gear stage is switched by operation of a shifter, and a clutch that connects the internal combustion engine and the manual transmission, and

   the one or more processors (56) are configured to:

   determine an operation amount of the gas pedal to the MT vehicle model (530) from the operation state of the accelerator pedal (22);
   determine an operation amount of the shifter and an operation of the clutch to the MT vehicle model (530) from the operation state of the shift device;
   calculate the drive wheel torque (Tw) and a virtual engine speed (Ne) of the internal combustion engine using the MT vehicle model (530) based on the operation amount of the gas pedal and the operation amount of the shifter;
   when changing the motor torque in response to the operation state, change the motor torque to apply the drive wheel torque (Tw) to a drive wheel (8) of the electric vehicle (10); and
   when changing the pseudo engine sound in response to the operation state, change the pseudo engine sound using the virtual engine speed (Ne) as a parameter.

8. The electric vehicle (10) according to any one of claims 1 to 7,
   wherein the controller (50) is further configured to:

   acquire a biological state of the driver; and
   change the pseudo engine sound based on the biological state.

9. A control system of an electric vehicle (10) that uses an electric motor (2) as a power unit for traveling, comprising:

   one or more memories (54); and
   one or more processors (56) connected to the one or more memories (54),
   wherein the electric vehicle (10) is configured to be switchable to an autonomous driving mode in which at least acceleration and deceleration are automatically performed without driving operation by a driver, the electric vehicle (10) comprises:

an accelerator pedal (22);
a shift device for selecting a gear stage (GP) that simulates operation of a transmission; and
a speaker (44) that outputs a pseudo engine sound that simulates an engine sound, and

the one or more processors (56) are configured to:

when the electric vehicle (10) is not in the autonomous driving mode, change a motor torque output by the electric motor (2) and the pseudo engine sound in response to an operation state of the accelerator pedal (22) and the shift device operated by the driver; and
when the electric vehicle (10) is in the autonomous driving mode, virtually determine the operation state of the accelerator pedal (22) and the shift device and change at least one of the motor torque output by the electric motor (2) and the pseudo engine sound in response to the virtual operation state.

10. The control system according to claim 9,

wherein the one or more memories (54) stores one or more pieces of operation characteristic information representing a characteristic of an operation related to at least one of the accelerator pedal (22) and the shift device, and
the one or more processors (56) are further configured to, when the electric vehicle (10) is in the autonomous driving mode, determine the virtual operation state based on operation characteristic information selected from the one or more pieces of operation characteristic information.

11. The control system according to claim 9 or 10,

wherein the one or more memories (54) stores a MT vehicle model (530) simulating a torque characteristic of drive wheel torque (Tw) in a MT vehicle including an internal combustion engine in which an engine torque is controlled by operation of a gas pedal, a manual transmission in which a gear stage is switched by operation of a shifter, and a clutch that connects the internal combustion engine and the manual transmission, and
the one or more processors (56) are further configured to:

determine an operation amount of the gas pedal to the MT vehicle model (530) from the operation state of the accelerator pedal (22);
determine an operation amount of the shifter and an operation of the clutch to the MT vehicle model (530) from the operation state of the shift device;
calculate the drive wheel torque (Tw) and a virtual engine speed (Ne) of the internal combustion engine using the MT vehicle model (530) based on the operation amount of the gas pedal and the operation amount of the shifter;
when changing the motor torque in response to the operation state, change the motor torque to apply the drive wheel torque (Tw) to a drive wheel (8) of the electric vehicle (10); and
when changing the pseudo engine sound in response to the operation state, change the pseudo engine sound using the virtual engine speed (Ne) as a parameter.

*FIG. 1*

*FIG. 2*

Accelerator pedal
operation amount

Characteristic A1

Characteristic A2

acceleration
judgment

Time

*FIG. 3A*

Characteristic B1

| 1 s t | 2 n d | 3 r d | 4 t h | 5 t h |

Vehicle speed

1st<->2nd  2nd<->3rd  3rd<->4th  4th<->5th

Characteristic B2

| 1 s t | 2 n d | 3 r d | 4 t h | 5 t h |

Vehicle speed

0 km/h       1st<->2nd  2nd<->3rd       2nd<->3rd  4th<->5th

*FIG. 3B*

dt1

dt2

Accelerator pedal
operation amount

Characteristic C1

Characteristic C2

Pseudo clutch pedal
operation amount

Characteristic C1

Characteristic C2

Gear stage

Time

Shift change
judgment

*FIG. 3C*

FIG. 4

*FIG. 5*

*FIG. 6*

FIG. 7A

FIG. 7B

FIG. 7C

FIG. 8

*FIG. 9*

*FIG. 10*

FIG. 11

Europäisches
Patentamt

European
Patent Office

Office européen
des brevets

# EUROPEAN SEARCH REPORT

**Application Number**

EP 24 21 1276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/041070 A1 (ISAMI YOICHIRO [JP] ET AL) 10 February 2022 (2022-02-10) * paragraphs [0052] - [0058], [0066] - [0068], [0078], [0082]; figures 1-12 * | 1-11 | INV. B60L15/20 |
| X | DE 10 2021 119980 A1 (TOYOTA MOTOR CO LTD [JP]) 10 February 2022 (2022-02-10) * paragraphs [0025] - [0029], [0057], [0062] - [0063]; figures 1-13 * | 1-11 | |

**TECHNICAL FIELDS SEARCHED (IPC)**

B60K
B60L

The present search report has been drawn up for all claims

| Place of search | Date of completion of the search | Examiner |
|---|---|---|
| The Hague | 27 February 2025 | Schury, Dominik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 24 21 1276

This annex lists the patent family members relating to the patent documents cited in  the above-mentioned European search report.
The members are as contained in the European Patent Office EDP file on
The European Patent Office is in no way liable for these particulars which are merely given for the purpose of information.

27-02-2025

| Patent document cited in search report | Publication date | Patent family member(s) | Publication date |
|---|---|---|---|
| US 2022041070  A1 | 10-02-2022 | CN       114056117 A | 18-02-2022 |
|  |  | JP        7298566 B2 | 27-06-2023 |
|  |  | JP      2022030862 A | 18-02-2022 |
|  |  | US      2022041070 A1 | 10-02-2022 |
|  |  | US      2024278654 A1 | 22-08-2024 |
|  |  | US      2024278655 A1 | 22-08-2024 |
|  |  | US      2024278656 A1 | 22-08-2024 |
| DE 102021119980 A1 | 10-02-2022 | CN       114056115 A | 18-02-2022 |
|  |  | DE 102021119980 A1 | 10-02-2022 |
|  |  | JP        7294272 B2 | 20-06-2023 |
|  |  | JP      2022030868 A | 18-02-2022 |
|  |  | US      2022041066 A1 | 10-02-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022030872 A

- JP 2011215437 A